# FASCICULE DE BREVET EUROPEEN

(11) **EP 2 679 120 B1**
(45) Date de publication et mention de la délivrance du brevet: **09.11.2016**
(21) Numéro de dépôt: 13158706.5
(22) Date de dépôt: 13.03.2009
(51) Int. Cl.: A47J 31/36

(54) **Appareil et capsule pour la préparation d'une boisson**
Gerät und Kapsel zur Herstellung eines Getränks
Appliance and capsule for preparing a beverage

(30) Priorité: 14.03.2008 EP 08004876
(43) Date de publication de la demande: 01.01.2014
(62) Demande divisionnaire de: 09718825.4
(73) Titulaire: Mocoffee AG, 8008 Zürich (CH)
(72) Inventeur: Favre, Eric, 1040 St-Barthélemy (CH)
(74) Mandataire: reuteler & cie SA

(56) Documents cités:
- EP-A1- 1 669 011
- US-B1- 6 182 554

## Description

La présente invention concerne un appareil et une capsule pour la préparation d'une boisson par injection d'eau chaude sous pression dans la capsule.

Des appareils pour la préparation de boissons par l'injection d'eau chaude à travers une capsule contenant une substance à extraire, telle que du café, sont connues et décrites par exemple dans les publications EP1646304, EP1646305, WO2007016977. Dans EP1646305, la capsule est introduite dans l'appareil en orientant la capsule de sorte à ce que les faces d'injection et d'extraction se trouvent dans un plan essentiellement vertical. La capsule est retenue dans une position intermédiaire et ensuite déplacée de la position intermédiaire à sa position finale dans le porte-capsule quand le mécanisme de fermeture pour l'injection est activé.

Dans le dispositif selon la publication WO2007016977, la capsule est introduite directement dans un porte-capsule dans une première position, le porte-capsule étant ensuite pivoté dans une deuxième position d'injection et après l'injection pivoté encore dans une troisième position pour l'éjection de la capsule. Un désavantage de ce système antérieur résulte des mouvements multiples du porte-capsule, la complexité des pièces mécaniques pouvant diminuer la fiabilité de l'appareil et augmenter son coût. Par ailleurs, il est plus difficile d'assurer une parfaite étanchéité de la tête d'injection contre le porte-capsule, autour de la capsule, tenant compte des pressions élevées (6 à 12 bars).

Le but de l'invention est de fournir un appareil pour la préparation de boissons à partir de capsules par injection d'eau chaude sous pression, qui est fiable et économe.

Il est avantageux de fournir un appareil pour la préparation de boissons à partir de capsules qui est facile à utiliser.

Il est avantageux de fournir un appareil pour la préparation de boissons à partir de capsules qui est ergonomique.

Il est avantageux de fournir un appareil pour la préparation de boissons à partir de capsules permettant l'extraction de boissons à haute pression de manière fiable.

Ci-dessous sont décrits un appareil et une capsule non-revendiqués pour la préparation d'une boisson ou d'un aliment, la capsule contenant une substance à extraire par introduction d'eau chaude dans la capsule, l'appareil comprenant un bloc d'extraction avec un canal d'introduction de la capsule, un porte-capsule avec une paroi d'extraction, une tête d'injection pour l'injection d'eau chaude dans la capsule, et un mécanisme d'ouverture et fermeture pour effectuer un mouvement relatif entre le porte-capsule et la tête d'injection pour l'ouverture et la fermeture de la tête d'injection au porte-capsule. Le canal d'introduction est incliné à un angle entre 30 et 70 degrés par rapport au plan horizontal. Une portion de la paroi latérale du logement du porte-capsule distant du canal d'introduction, est inclinée à un angle entre 55 et 25° par rapport au plan horizontal.

La paroi latérale de l'enveloppe de la capsule a une forme évasée tronquée, l'angle de conicité dans une forme d'exécution étant entre 0° et 10°. Dans une forme d'exécution, la capsule remplie d'une substance pour la préparation d'une boisson, a une répartition de poids telle que le centre de gravité G est situé dans la partie inférieure de la capsule, à savoir entre la ligne à mi-hauteur et le fond.

Cela permet d'améliorer l'orientation de la capsule lorsqu'elle tombe dans le logement afin d'assurer qu'elle tombe de manière fiable. Le centre de gravité peut être abaissé en variant l'épaisseur et la forme de l'enveloppe de la capsule, par exemple en ayant un ajout de matière sur la paroi de fond de la capsule. Le fond de la capsule peut être plus épais que les parois latérales de la capsule.

Dans une forme d'exécution, le centre de gravité est abaissé en ne remplissant que partiellement l'enveloppe de la capsule d'une substance pour la préparation d'une boisson, à un niveau inférieur à 95%, de préférence inférieure à 90% du volume total de l'intérieur de la capsule.

Avantageusement l'angle du canal d'introduction permet l'introduction de la capsule jusqu'à sa position finale dans le porte-capsule et permet aussi l'éjection facile de la capsule dans une configuration compacte et économe. Le canal d'introduction est incliné de préférence à un angle entre 40 et 60 degrés par rapport au plan horizontal. L'angle du canal d'introduction conjugué avec l'inclinaison de la portion de paroi latérale du logement de la capsule et la forme de la capsule permet d'assurer l'arrêt de la capsule sans mécanisme supplémentaire.

Le bloc d'extraction comprend un orifice d'éjection de la capsule qui peut avantageusement être orienté à un angle latéral βentre 20 et 60 degrés, par rapport à un plan vertical (PV) traversant un axe (IN) du canal d'introduction. De préférence, l'angle latéral β est entre 30 et 50 degrés.

Ci-dessous est décrit un appareil non-revendiqué pour la préparation d'une boisson ou d'un aliment liquide à partir d'une capsule contenant une substance à extraire par introduction d'eau sous pression dans la capsule, l'appareil comprenant un bloc d'extraction avec un canal d'introduction de la capsule, un porte-capsule avec une paroi d'extraction, une tête d'injection pour l'injection d'eau dans la capsule, et un mécanisme d'ouverture et fermeture pour effectuer un mouvement relatif entre le porte-capsule et la tête d'injection pour l'ouverture et la fermeture de la tête d'injection au porte-capsule, l'appareil comprenant en outre un mécanisme d'éjection de la capsule comprenant un poussoir configuré pour engager le dessous d'une collerette de la capsule lorsque la tête d'injection est remontée à sa position ouverte.

Le mécanisme d'éjection de la capsule comprend un tirant ou partie de tirant solidaire du poussoir ou attaché à celui-ci et comprenant un crochet, une épaule ou autre moyen de couplage déconnectable configuré pour engager une épaule, un crochet ou autre moyen de couplage déconnectable complémentaire de la tête d'injection lorsqu'elle est remontée.

Le mécanisme d'éjection de la capsule peut être muni d'un ressort de rappel repoussant le poussoir dans une position de retrait permettant l'insertion d'une capsule dans le logement du porte-capsule.

Le mécanisme d'éjection de la capsule peut avantageusement comprendre une came sur, ou fixée, au bloc d'extraction, configurée pour libérer le tirant de la tête d'injection lorsque la tête d'injection remonte à sa position ouverte.

Des buts de l'invention sont réalisés par l'appareil pour la préparation de boissons à partir de capsules par injection d'eau chaude sous pression selon la revendication 1.

Dans la présente est décrit un appareil pour la préparation d'une boisson ou d'un aliment liquide à partir d'une capsule contenant une substance à extraire par introduction d'eau sous pression dans la capsule, l'appareil comprenant un bloc d'extraction avec un canal d'introduction de la capsule, un porte-capsule avec une paroi d'extraction, une tête d'injection pour l'injection d'eau dans la capsule, et un mécanisme d'ouverture et fermeture pour effectuer un mouvement relatif entre le porte-capsule et la tête d'injection pour l'ouverture et la fermeture de la tête d'injection au porte-capsule, caractérisé en ce que le porte-capsule est monté de manière pivotante par rapport au corps du bloc d'extraction, le porte-capsule pouvant pivoter d'une position d'extraction à une position d'évacuation de la capsule, l'appareil comprenant en outre un mécanisme d'éjection de la capsule comprenant un rail configuré pour supporter une collerette de la capsule lorsque le porte-capsule est pivoté de sa position d'extraction à sa position d'évacuation.

D'autres buts et aspects avantageux de l'invention ressortiront des revendications, de la description détaillée et des dessins annexés dans lesquels :
La figure 1a est une vue en perspective d'un bloc d'extraction d'un appareil pour la confection d'une boisson à partir d'une capsule qui ne fait pas partie de l'invention;
La figure 1b est une vue en perspective et en coupe du bloc d'extraction selon la figure 1a ;
La figure 1c est une vue du dessus du bloc d'extraction selon la figure 1 a ;
La figure 1d est une autre vue en coupe du bloc d'extraction selon la figure 1a ;
La figure 2a est une autre vue en perspective et en coupe du bloc d'extraction selon la figure 1a, avec la tête d'injection dans la position haute (ouverte), avant introduction d'une capsule ;
La figure 2b est une vue similaire à la figure 2a, montrant l'introduction d'une capsule, en train de tomber dans un logement d'un porte capsule de l'appareil ;
La figure 2c est une vue similaire à la figure 2a, montrant la capsule dans le logement du porte capsule de l'appareil ;
La figure 2d est une figure similaire à la figure 2a avec une capsule dans le logement du porte capsule et la tête d'injection dans la position basse (fermée) prêt pour l'introduction d'eau sous pression ;
La figure 2e est une figure similaire à la figure 2a montrant la tête d'injection en train d'être remontée et la capsule après utilisation en train d'être éjectée ;
La figure 2f est une figure similaire à la figure 2e montrant la tête d'injection presque totalement remontée et la capsule après utilisation en train d'être évacuée ;

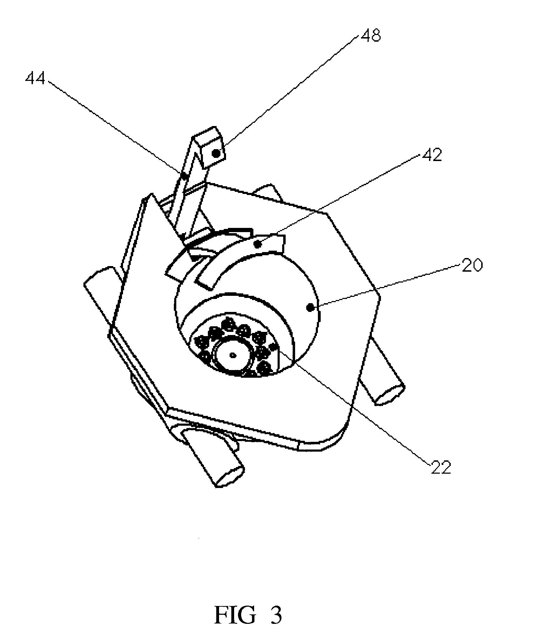

La figure 3 est une vue en perspective du porte-capsule et du mécanisme d'éjection de la capsule ;
La figure 4 est une vue en perspective et en coupe du porte-capsule avec un mécanisme d'éjection qui ne fait pas partie de l'invention;
Les figures 5a à 5g sont des vues en coupe du bloc d'extraction selon une forme d'exécution de l'invention, montrant des étapes dans un cycle d'opération de la machine de l'introduction d'une capsule jusqu'à l'extraction de la capsule ;
Les figures 6a à 6c sont des figures en perspective du bloc d'extraction de la l'invention illustrée dans les figures 5a à 5g, la figure 6a illustrant le bloc d'extraction prêt pour l'introduction d'une capsule, la figure 6b dans une position lors de l'injection d'eau dans la capsule et de l'extraction d'une boisson, et la figure 6c dans la position d'éjection de la capsule après extraction, des parties du bloc d'extraction étant enlevées pour une meilleure visibilité du porte-capsule.

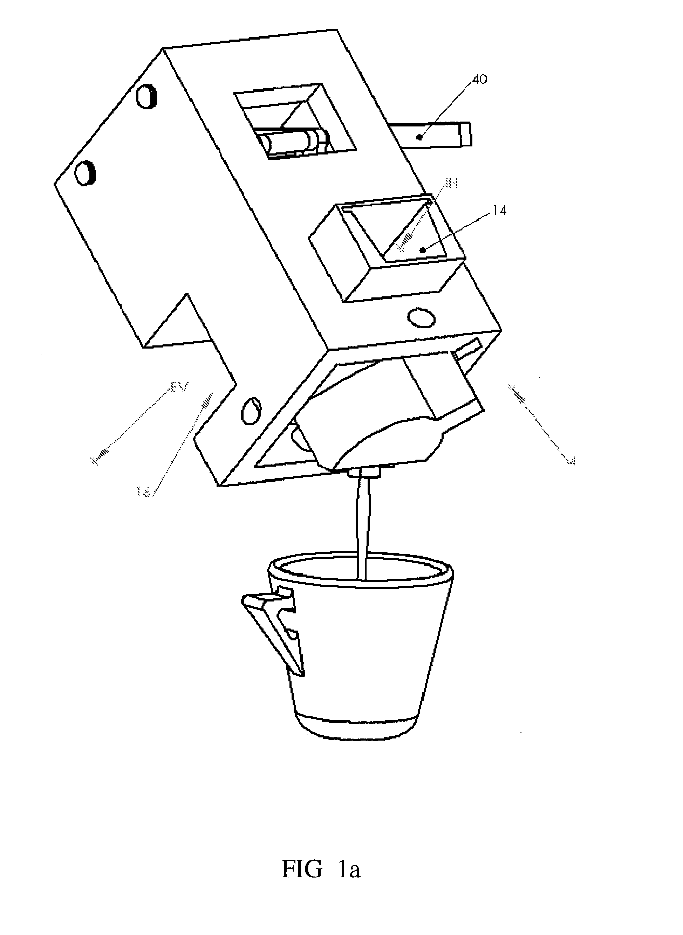

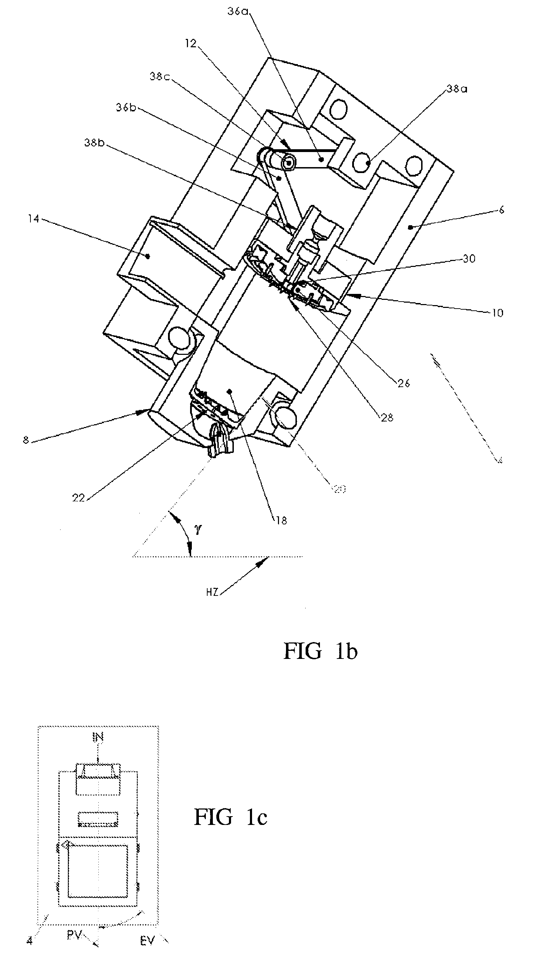

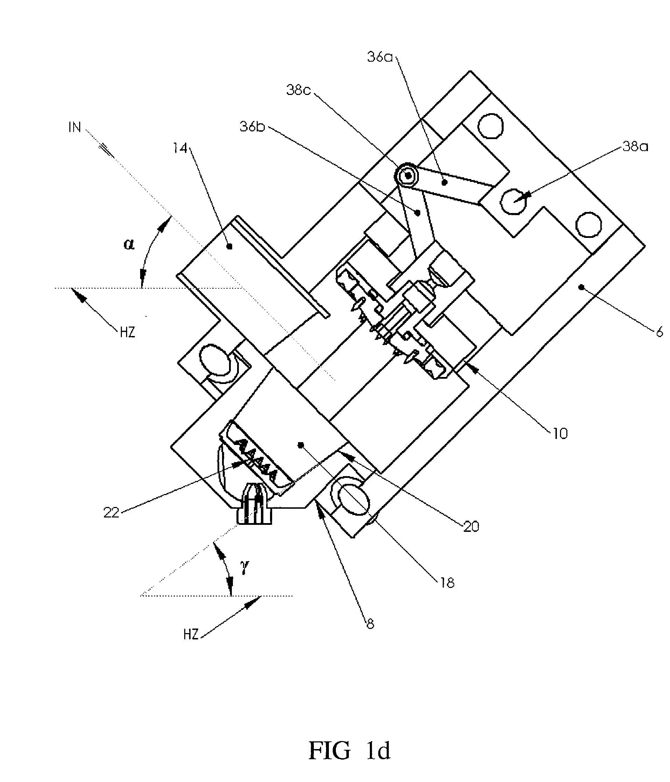

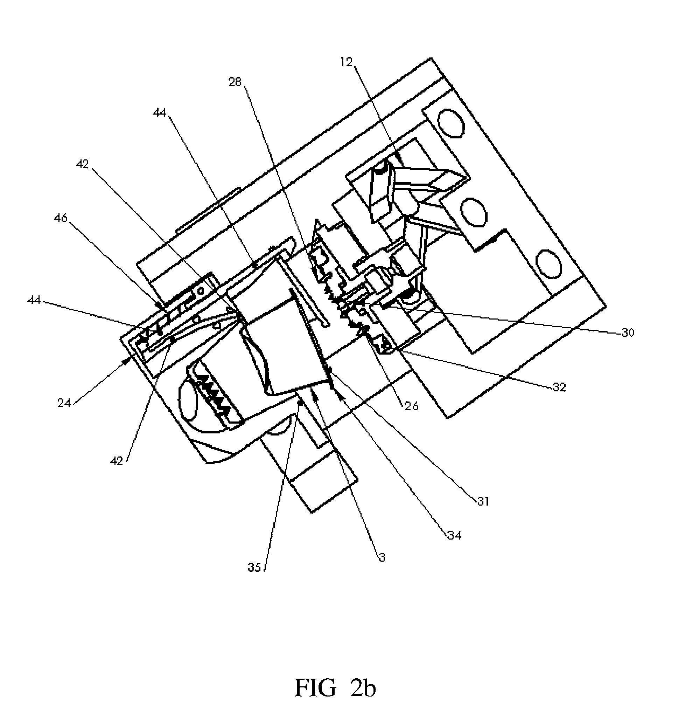

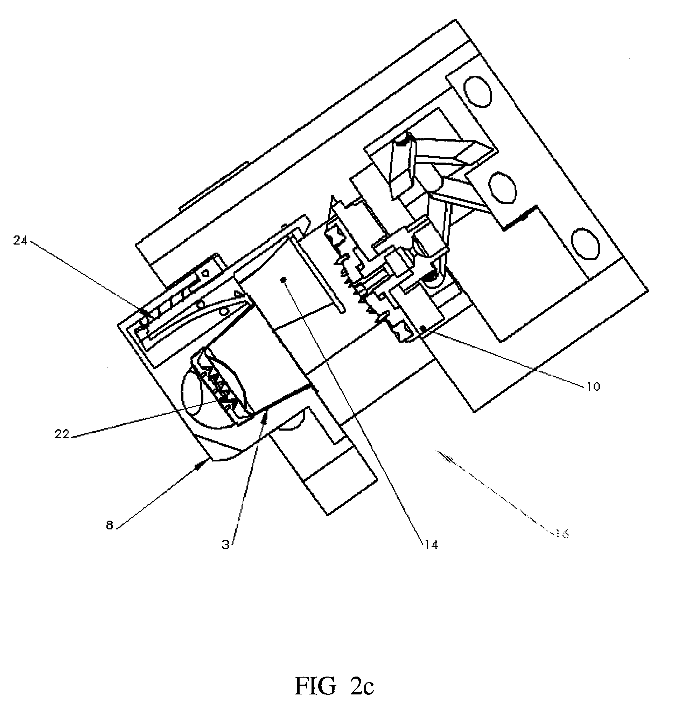

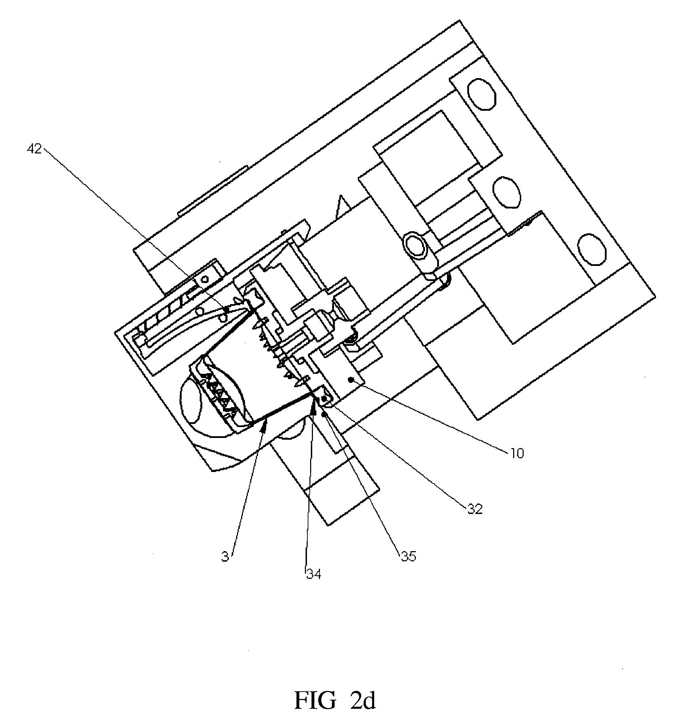

Faisant référence aux figures, plus particulièrement aux figures 1a, 1b, 2b et 2d, un appareil pour la confection d'une boisson à partir d'une capsule comprend un bloc d'extraction 4 avec un corps 6, un porte-capsule 8, une tête d'injection 10 et un mécanisme d'ouverture 12 de la chambre d'extraction. Le bloc d'extraction comprend en outre un canal d'introduction 14 pour insertion d'une capsule dans l'appareil, et un canal ou orifice d'éjection 16 pour l'évacuation d'une capsule après utilisation.

Le porte-capsule 8 comprend un logement 18 avec une paroi latérale 20 et une paroi d'extraction 22 formant le fond du logement 18. La paroi latérale 20 du logement a une forme évasée tronquée correspondant à la forme de la capsule 3 destinée à être reçue dans le logement. La paroi d'extraction peut avoir une ou plusieurs pointes de perforation et un ou plusieurs orifices pour l'écoulement du produit liquide extrait de la capsule après perforation. La paroi d'extraction et le logement du porte-capsule, ainsi que la capsule peuvent avantageusement être réalisés tels que décrits dans le brevets EP 507905 ou EP1646304 ou peuvent avoir d'autres configurations. La paroi latérale de l'enveloppe de la capsule a une forme évasée tronquée, l'angle de conicité dans une forme d'exécution étant entre 0° et 10°. La paroi de fond de la capsule peut être de forme essentiellement convexe, concave ou plate.

Le porte-capsule comprend en outre un mécanisme d'éjection de la capsule 24 qui sera décrit plus en détail ci-dessous.

La tête d'injection 10 comprend une paroi d'injection 26 avec des pointes de perforation 28 et un canal d'alimentation d'eau sous pression 30 pour l'injection d'eau à travers la paroi supérieure 32 de la capsule quand la tête d'injection est fermée contre le porte-capsule 8, tel qu'illustré dans la figure 2d. La paroi d'injection peut avantageusement avoir la construction telle que décrite dans le brevet EP1646304 ou peut avoir d'autres configurations.

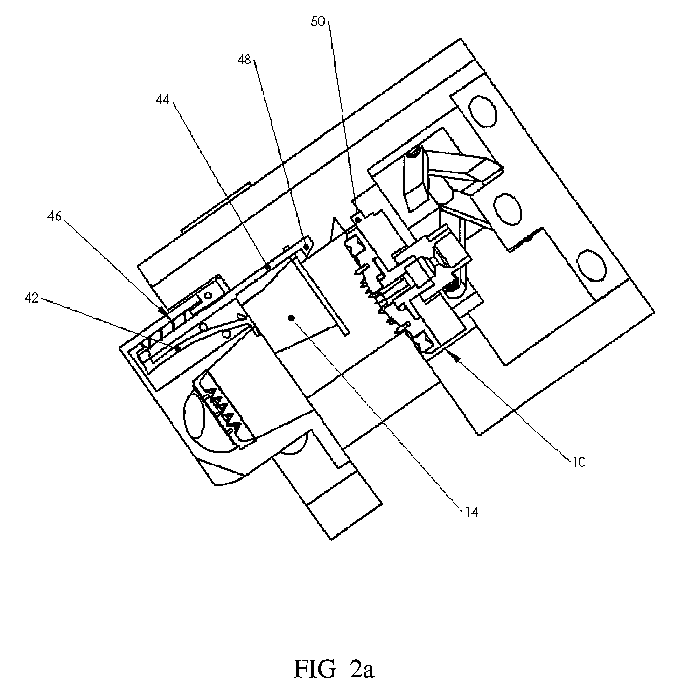

La tête d'injection est amovible entre une position d'ouverture permettant l'introduction d'une capsule dans le logement 18 du porte-capsule 8, tel qu'illustré dans la figure 2a, et une position fermée où la tête d'injection est plaquée contre le porte-capsule tel qu'illustré dans la figure 2d. Un joint 32 entourant la paroi d'injection permet de sceller hermétiquement la tête d'injection contre la collerette 34 de la capsule qui est plaqué de l'autre coté contre le rebord 35 du porte-capsule.

Le déplacement de la tête d'injection est actionné par le mécanisme d'ouverture et fermeture 12, ce mécanisme comprenant au moins deux bras ou paires de bras articulés 36a, 36b. Un bras ou paire de bras 36a est fixé de manière pivotante 38a sur le corps 6 du bloc d'extraction et un autre bras ou paire de bras 36b est fixé de manière pivotante 38b sur la tête d'injection, les deux bras (ou deux paires de bras) étant articulés l'un par rapport à l'autre autour d'un axe d'articulation 38c. L'axe de rotation 38a du premier bras articulé 36a est solidaire d'un levier 40 qui, dans la forme d'exécution illustrée, est destiné à être commandé manuellement par un utilisateur pour la rotation du premier bras articulé 36a.

Le premier bras (ou paires de bras) articulé 36a peut avantageusement être plus court que le deuxième bras (ou paires de bras) articulé 36b afin de réduire l'encombrement du bloc d'extraction, notamment le volume nécessaire pour les déplacements des bras articulés. Le couple nécessaire pour le déplacement de la tête d'injection en position haute est faible. Par contre, pour la fermeture hermétique de la tête d'injection contre la collerette de la capsule et le rebord du porte-capsule, tenant compte des pressions exercées lors de l'injection d'eau sous pression, la force d'appui doit être grande. Les bras articulés permettant un grand déplacement à faible couple au début du mouvement de fermeture et un faible déplacement à force élevée pour la fermeture. Le verrouillage dans la position fermée est assuré lorsque les bras articulés 36a, 36b sont alignés ou ont légèrement passé le point d'alignement, tel qu'illustré dans la figure 2d.

Le mécanisme d'éjection de la capsule 24 comprend un poussoir d'éjection 42 couplé à un tirant 44, et un ressort de rappel 46.

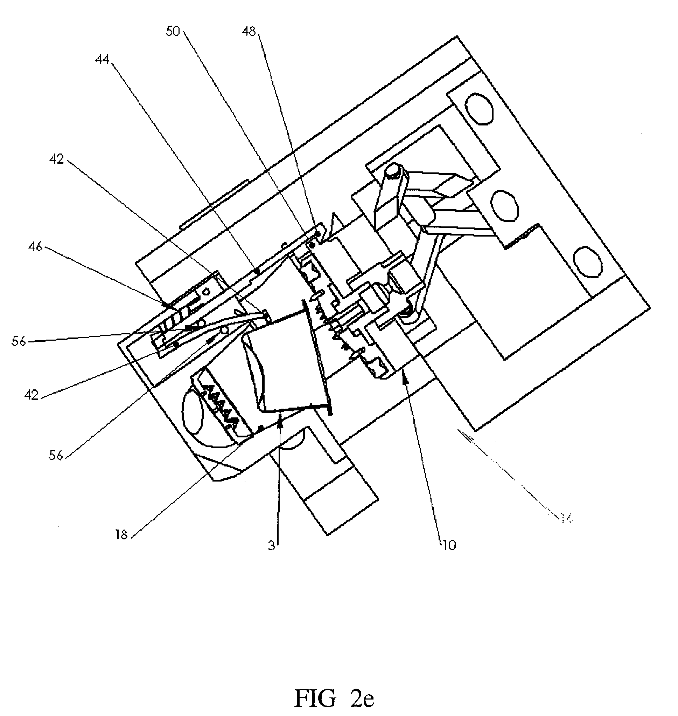

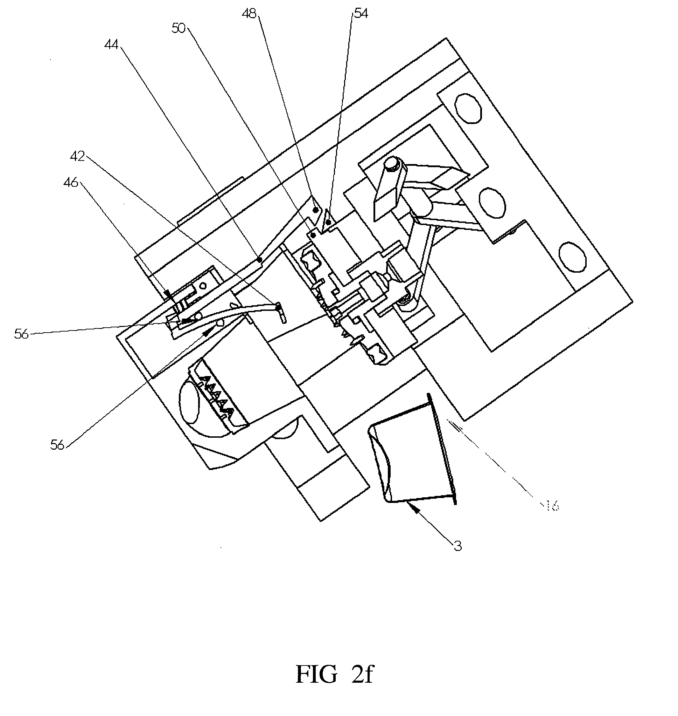

Le ressort de rappel maintient le poussoir 42 dans une position en retrait (position basse) telle qu'illustrée dans la figure 2a. Le tirant 44 comprend un crochet 48 destiné à engager un crochet ou épaule complémentaire 50 sur la tête d'injection 10 lorsque celle-ci est remontée vers sa position haute tel qu'illustré dans la figure 2e. Lorsque le tirant est remonté par la tête d'injection lors de l'ouverture, le poussoir 42 est remonté hors de sa position de retrait et soulève la collerette 52 de la capsule afin de l'éjecter du logement 18 et la faire évacuer par l'orifice d'évacuation 16. Le crochet 48 du tirant est libéré de l'épaule ou du crochet complémentaire 50 de la tête d'injection par une came 54, solidaire ou fixée au corps 6, lorsque la tête d'injection atteint ou est proche de sa position haute (c'est-à-dire la plus ouverte) tel qu'illustré dans la figure 2f.

Le tirant est ainsi libéré et repoussé par le ressort 46 dans sa position de retrait, tel qu'illustré dans la figure 2a, prêt à l'introduction d'une nouvelle capsule dans le logement du porte-capsule.

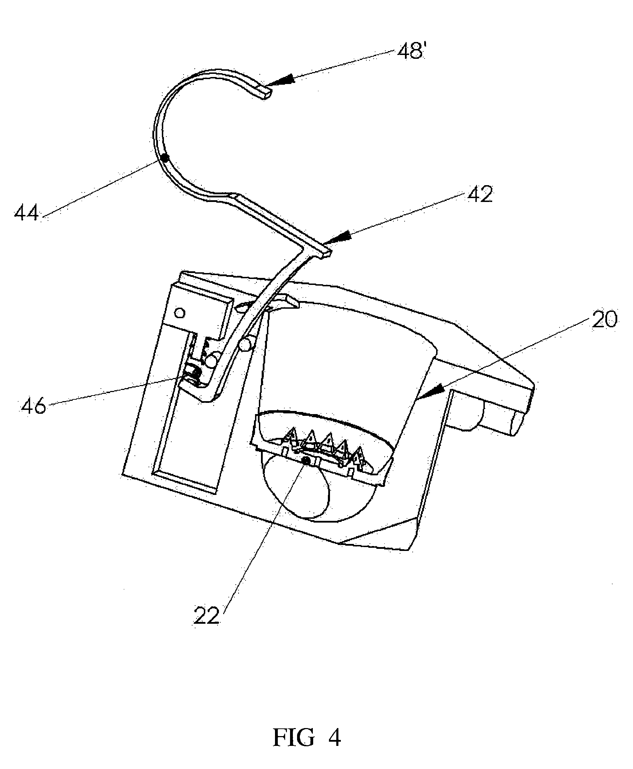

Dans la variante selon la figure 4, le poussoir est repoussé par un ressort de rappel 46. Toutefois la partie de tirant comprend une boucle dont l'extrémité libre 48' fait office de crochet pour engager l'épaule 50 de la tête d'injection, la boucle ayant une certaine élasticité lui permettant d'être décrochée de la tête d'injection lorsque celle-ci atteint sa position haute (ouverte).

Pour la préparation d'une boisson, la tête d'injection est dans sa position haute tel qu'illustré dans la figure 2a, et l'utilisateur insère une capsule dans le canal d'introduction 14. L'axe IN du canal d'introduction a un angle d'inclinaison (α) entre 30 et 70 degrés, de préférence entre 40 et 60 degrés, par exemple environ 45 degrés, par rapport à un plan horizontal HZ. La capsule 3 glisse par force de gravité le long du canal d'introduction jusqu'à ce qu'elle tombe dans le logement 18 du porte-capsule 8 tel qu'illustré dans la figure 2b.

Dans une forme d'exécution, la combinaison de l'angle d'inclinaison (α) du canal, du poids, de la forme de la capsule et du coefficient de frottement de la capsule contre le canal est configurée pour assurer une vitesse de pointe (V) de la capsule au moment juste avant de buter contre la paroi latérale, entre 0,5ms⁻¹ et 3,0ms⁻¹ de préférence entre 1,0ms⁻¹ et 2,0ms⁻¹. L'énergie cinétique de la capsule est, par cette mesure, optimisée pour assurer que la capsule tombe dans le logement 18 de manière fiable et en position correcte.

Dans une forme d'exécution, la capsule remplie d'une substance pour la préparation d'une boisson, a une répartition de poids telle que le centre de gravité G est dans la partie inférieure de la capsule, à savoir entre la ligne à mi-hauteur M et le fond. Cela permet d'améliorer l'orientation de la capsule lorsqu'elle tombe dans le logement 18 afin d'assurer qu'elle tombe de manière fiable. Le centre de gravité peut être abaissé en variant l'épaisseur et la forme de l'enveloppe de la capsule, par exemple en ayant un ajout de matière sur la paroi de fond de la capsule. Le fond de la capsule peut être plus épais que les parois latérales de la capsule.

Le centre de gravité peut être abaissé aussi en ne remplissant que partiellement l'enveloppe de la capsule d'une substance pour la préparation d'une boisson, à un niveau inférieur à 95%, de préférence inférieure à 90% du volume total de l'intérieur de la capsule.

Le mécanisme d'ouverture et fermeture 12 est ensuite actionné par la rotation du levier 40 qui fait tourner le premier bras articulé 36a, qui fait pivoter à son tour le deuxième bras articulé 36b, faisant descendre la tête d'injection 10 jusqu'à ce qu'elle vienne en appui contre la capsule dans le logement 18 tel qu'illustré dans la figure 2d. Dans cette position de fermeture, le joint 32 de la tête d'injection s'appuie hermétiquement sur la face supérieure de la collerette 34 de la capsule prise en sandwich contre le rebord du porte-capsule, et les pointes 28 de la tête d'injection transpercent la paroi supérieure de la capsule.

L'eau sous pression entre 5 et 12 bars est injectée par le canal d'alimentation 30 et rentre dans la capsule par les orifices percés par les points 28. Lorsque la pression d'eau à l'intérieur de la capsule atteint un certain niveau, le fond de la capsule descend contre les pointes de perforation de la paroi d'extraction 22 et la substance à extraire s'écoule à travers les orifices de la paroi d'extraction.

Après la fin d'injection d'eau, la tête d'injection est remontée en actionnant le levier 40. Lors de la remontée, la tête d'injection engage le crochet 48 du mécanisme d'éjection qui, en étant relevé, remonte le poussoir 42 qui appuie sur la collerette 34 de la capsule et l'éjecte du logement 18. Le poussoir 42, guidé par des paliers 56 ou glissières effectue de préférence un mouvement curviligne ou rectiligne mais incliné vers l'orifice d'évacuation 16 pour mieux projeter la capsule 3 dans la direction de l'orifice d'évacuation.

La rotation des bras articulés 36a, 36b peut être effectuée manuellement comme pour la forme d'exécution illustrée, mais elle peut être également effectuée par un moteur. Le mécanisme d'ouverture et fermeture de la tête d'injection peut également être construit autrement, par exemple sous forme d'un actionneur linéaire avec un système vis-écrou, ou par un système hydraulique.

Dans la première forme d'exécution illustrée, l'axe IN du canal d'introduction 14 de la capsule n'est pas aligné sur un même axe EV que l'orifice d'évacuation 16 de la capsule. Cela permet de former une butée arrêtant la capsule et la faisant tomber dans le logement 18 du porte-capsule vers la fin de la descente dans le canal d'introduction 14. Dans la forme d'exécution illustrée, l'orifice d'évacuation est dirigé à un angle β de préférence entre 30 et 50 degrés, par exemple environ 45 degrés d'un plan vertical PV traversant l'axe IN du canal d'introduction (voir figure 1c). Cette configuration permet également une évacuation des capsules dans une corbeille de collecte des capsules usagées à côté du bloc d'extraction.

Avantageusement, l'introduction de la capsule dans son logement ne nécessite aucun mécanisme particulier ou compliqué, et l'éjection de la capsule de son logement est effectuée automatiquement et simplement en remontant la tête d'injection. Un système simple, fiable et ergonomique d'introduction et d'éjection des capsules est donc réalisé.

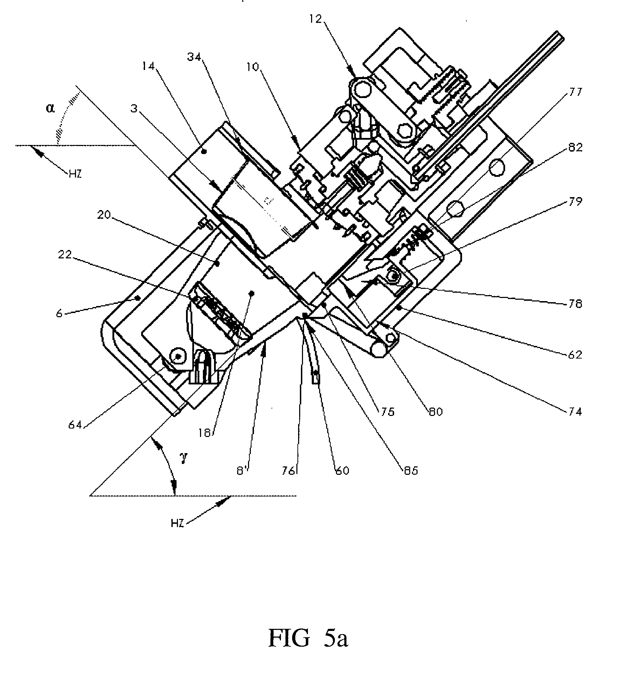

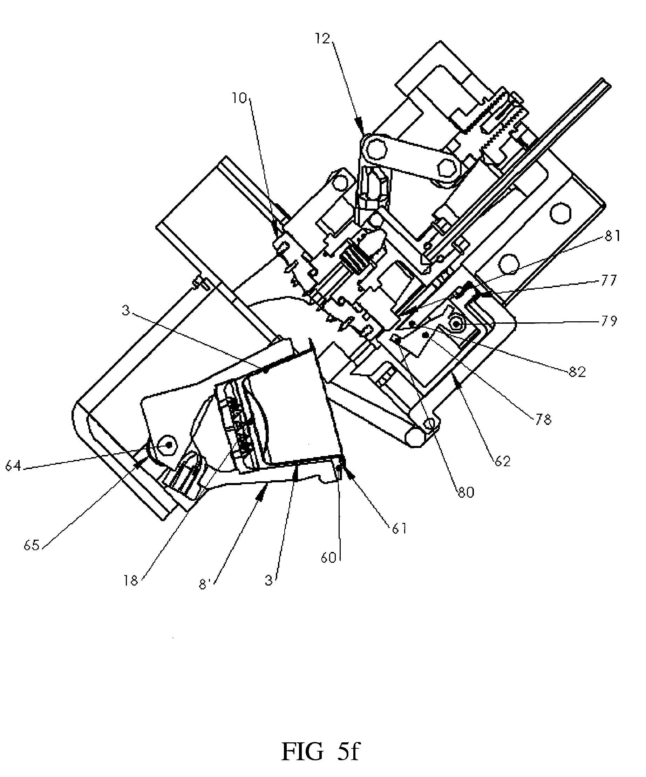

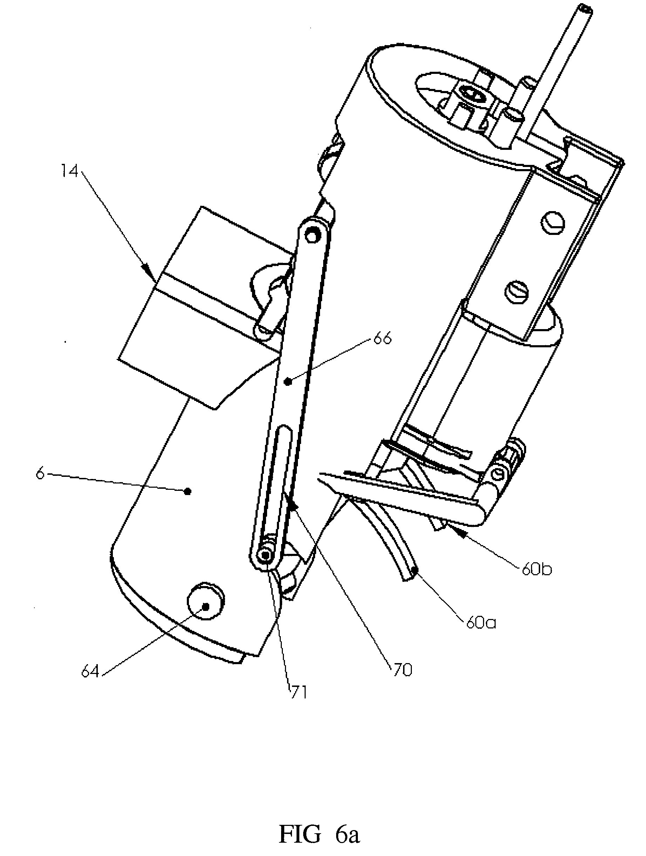

Faisant maintenant référence aux figures 5a à 5g et aux figures 6a à 6c, un bloc d'extraction selon une forme d'exécution de l'invention est illustré, dans lequel le mécanisme d'éjection et d'évacuation de la capsule est différent de ceux décrits précédemment. Pour ce qui concerne les éléments avec les mêmes numéros de référence, le lecteur pourra faire référence à la description y relative ci-dessus.

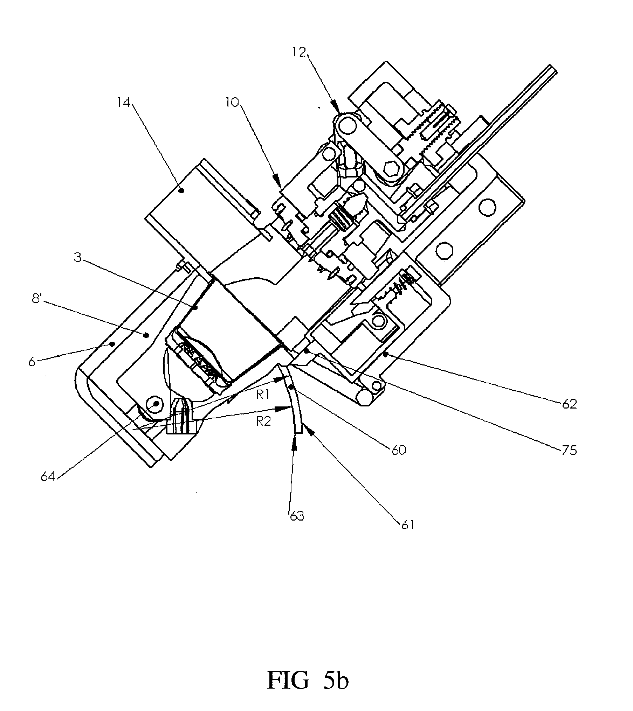

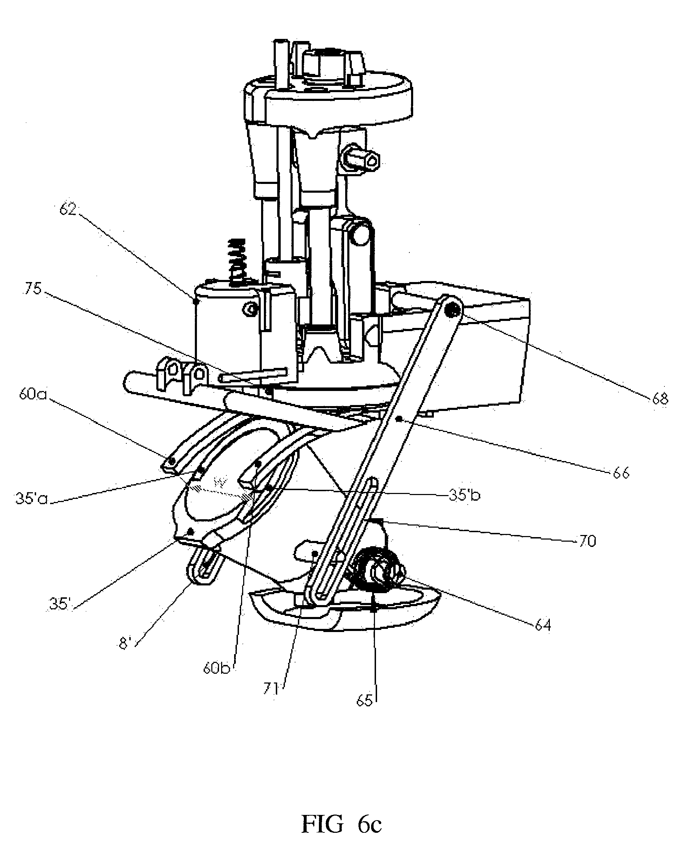

Dans cette variante, le mécanisme d'évacuation de la capsule 24' comprend un rail d'évacuation 60 ainsi qu'un dispositif de verrouillage 62 du porte-capsule 8'. Le porte capsule 8' est monté de manière pivotante autour d'un axe de rotation 64, par rapport au corps 6 du bloc d'extraction. Le rail d'évacuation 60 est solidaire du corps 6 du bloc d'extraction et comprend de préférence deux parties de rail 60a, 60b, tel qu'illustré dans la figure 6c, disposées de part et d'autre de la cavité 18 du porte-capsule. Les parties de rail 60a, 60b sont séparées par une distance w légèrement supérieure au diamètre d de la partie de la capsule en dessous de la collerette 34. Le porte-capsule comprend un rebord 35' avec des parties 35a, 35b en creux se positionnant sous les rails d'évacuation lorsque le porte-capsule est dans la position haute (position d'introduction de la capsule et d'extraction telle qu'illustrée dans les figures 5a, 5b). La partie du rebord 35' du porte-capsule qui n'est pas disposée sous le rail de guidage est à la hauteur de la surface supérieure du rail d'évacuation dans la position d'extraction, de sorte à ce que la collerette de la capsule puisse s'appuyer contre un rebord quasi continu autour du logement 18.

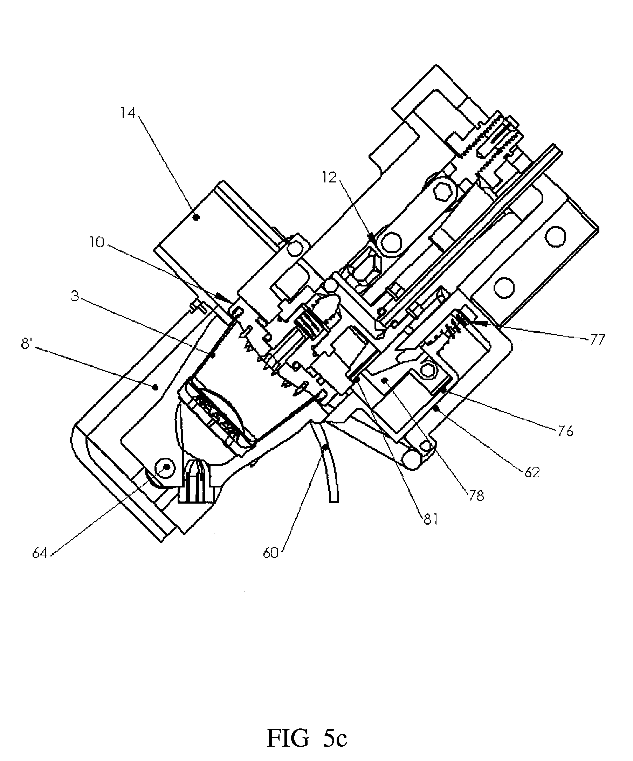

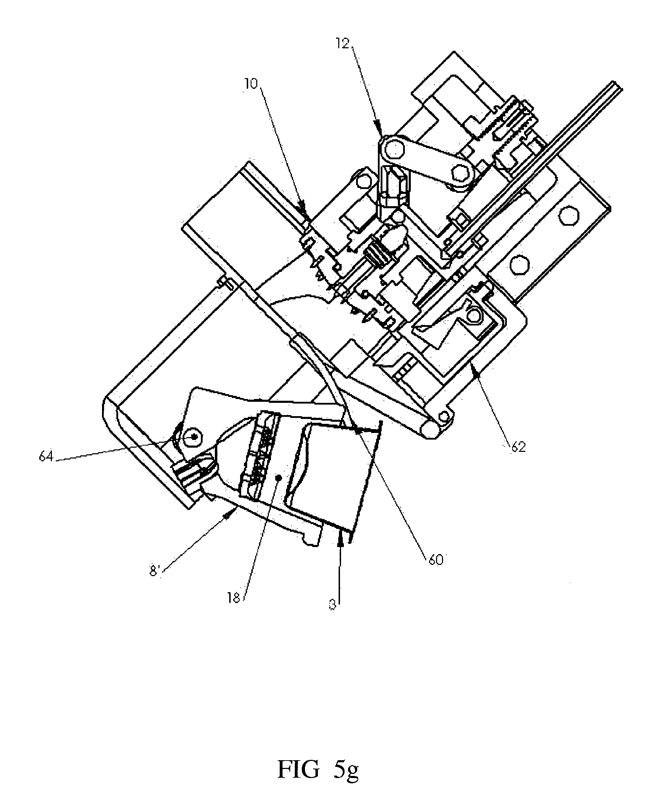

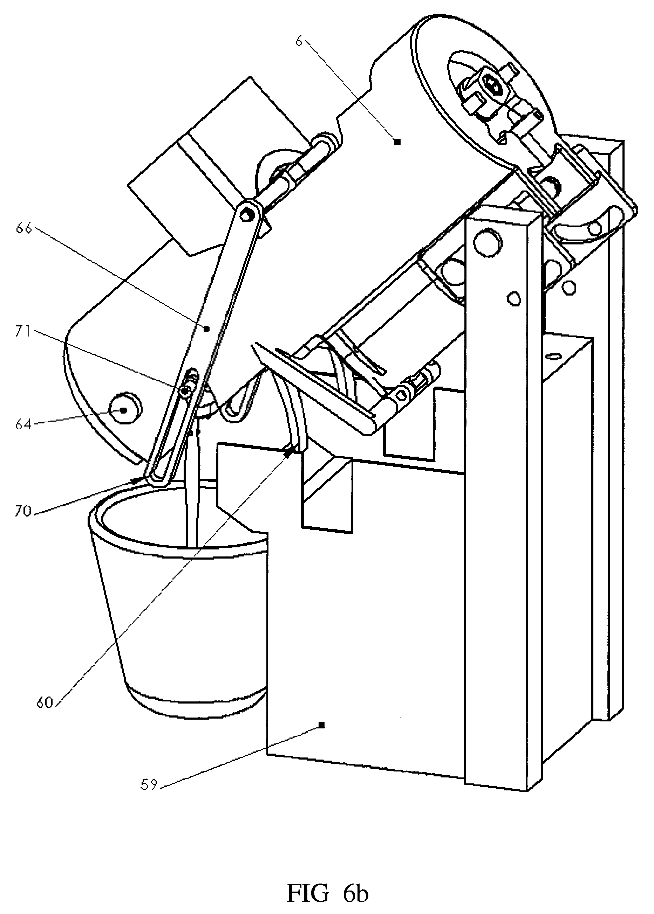

La distance de la surface supérieure 61 du rail d'évacuation 60 par rapport à l'axe de pivotement 64 du porte-capsule, est plus grande vers l'extrémité libre 63 (R1) que la distance de la surface supérieure du rail d'évacuation par rapport à l'axe de pivotement à proximité du corps du bloc d'extraction (R2). Ainsi, lorsque le porte-capsule pivote de sa position d'extraction tel qu'illustré dans la figure 5c, à la position d'éjection tel qu'illustré dans la figure 5g, le rail, en appuyant contre le dessous de la collerette de la capsule qui glisse le long du rail, soulève la capsule en dehors du logement 18. En raison de l'accélération du porte-capsule lors de son pivotement et du mouvement rapide, la capsule est éjectée hors du logement du porte-capsule avec une certaine vitesse permettant de bien se dégager du bloc d'extraction et d'être propulsée dans un bac d'évacuation 59 (voir fig. 6b) des capsules disposé sous le bloc d'extraction.

La rotation du porte-capsule de sa position d'extraction à la position d'évacuation est effectuée par un ressort 65, dans l'exemple illustré un ressort toroïdal, mais beaucoup d'autres formes de ressort et de mécanismes de rotation de la capsule peuvent être envisagés dans le cadre de cette invention. La rotation de la capsule peut également être entraînée par un moteur ou actuateur électrique.

Le retour du porte capsule de sa position d'évacuation à la position d'extraction est assuré par un bras de rappel 66 (voir figure 6c) qui est fixé de manière pivotante à la tête d'injection 10. Le bras de rappel 66 est monté de manière pivotante autour d'un axe 68 fixé à une partie solidaire de la tête d'injection 10, et vers l'autre extrémité du bras il y a une fente 70 dans laquelle un doigt 71 solidaire du corps du porte-capsule 8' est inséré. La fente 70 permet un certain déplacement du doigt 71 relatif au bras de rappel 66 lorsque la tête d'injection se déplace entre la position basse d'extraction (tel qu'illustré dans la figure 5c) à une position intermédiaire entre la position d'extraction et la position haute. Lorsque la tête d'injection remonte de cette position intermédiaire à la position haute telle qu'illustrée dans la figure 5a, le bras de rappel 66 engage le doigt 71 du porte-capsule et le tourne jusque dans sa position haute (position d'extraction). Dans cette position haute illustrée dans les figures 5a et 6a.

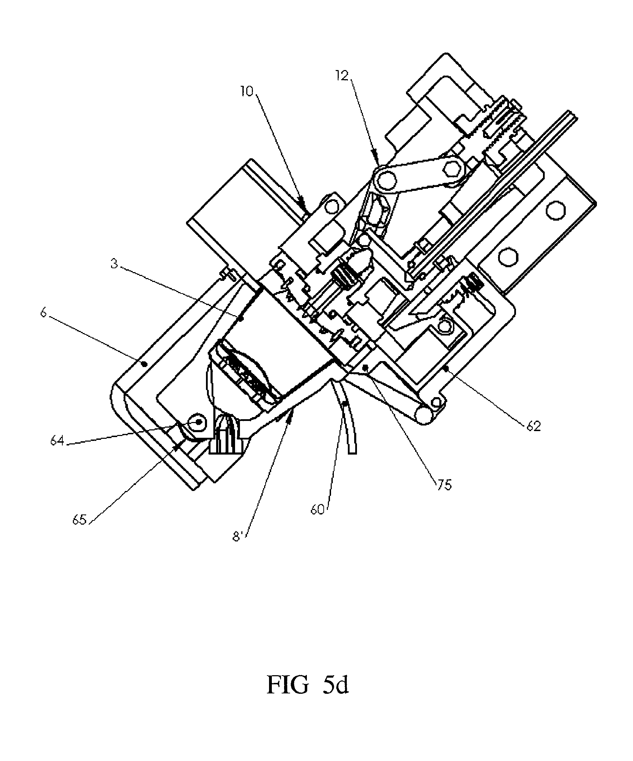

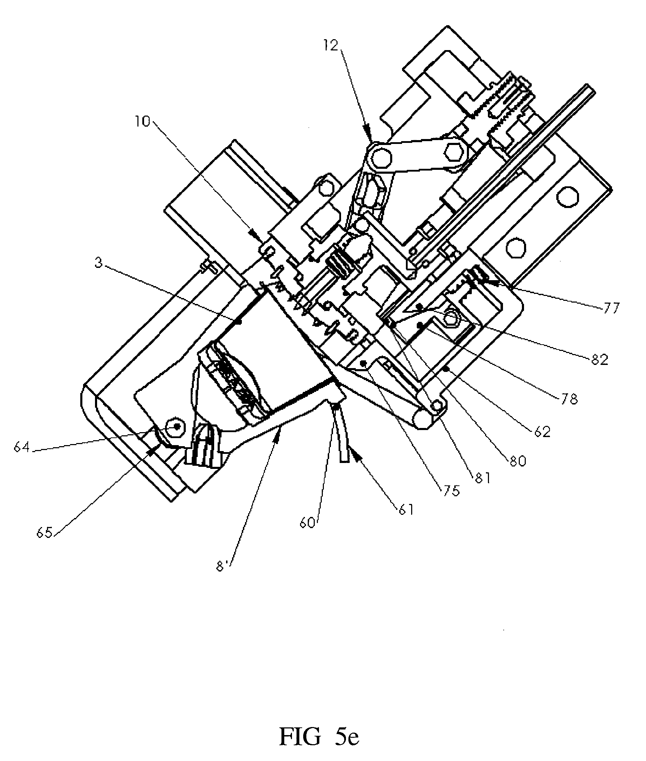

Le dispositif de verrouillage 62 du porte-capsule comprend un corps amovible 74 avec un doigt de verrouillage 75 en appui contre une épaule 76 du porte-capsule lorsque il est dans sa position d'extraction et le corps amovible est dans sa position de verrouillage, tel qu'illustré dans la figure 5a. Le corps amovible est monté de manière glissante sur le corps 6 du bloc d'extraction, un ressort 77 disposé entre le bloc d'extraction et le corps amovible repoussant le corps amovible dans la position de verrouillage illustrée dans la figure 5a. Un crochet 78 est monté sur un axe 79 de manière pivotante par rapport au corps amovible 74, et comporte une protubérance 80 destinée à engager une épaule complémentaire 81 de la de la tête d'injection (voir figure 5c) lorsqu'elle est descend dans la position d'extraction. Lorsque la tête d'éjection remonte vers sa position haute après un cycle d'extraction, le crochet 78 qui engage la tête d'éjection fait remonter le corps amovible 74, contre la poussée du ressort 77 de sorte à ce que le doigt de verrouillage 75 se dégage de l'épaule 76 du porte-capsule, tel qu'illustré dans les figures 5d et 5e. Cela permet au porte-capsule de pivoter à la position d'évacuation par la force du ressort 64 (illustré dans la figure 6c) agissant sur le porte-capsule. Lorsque la tête d'injection 10 s'approche de sa position haute, le crochet 78 bute contre une came 82 fixe par rapport au bloc 6 d'extraction, causant la rotation du crochet. Le crochet se dégage de la tête d'injection pour permettre au corps amovible 76 de retourner à sa position de verrouillage tel qu'illustré dans la figure 5g.

Le doigt de verrouillage 60 peut avoir une surface oblique 85 agissant comme surface de came pour remonter le doigt de verrouillage lorsque le porte-capsule est pivoté de retour dans sa position d'extraction. En effet, le doigt de verrouillage 75 est déjà dans sa position basse avant que le porte-capsule soit complètement retourné dans la position d'extraction et la surface de came oblique 85 permet au corps amovible de verrouillage de remonter pour permettre le passage de l'épaule 76 sous le doigt de verrouillage qui est repoussé ensuite dans sa position de verrouillage engageant l'épaule 76 du porte-capsule.

Dans les formes d'exécution illustrées, la capsule glisse par gravitation seule dans le canal d'introduction 14 jusqu'au logement 18. Toutefois, il est également possible de prévoir un doigt ou poussoir (non-illustré), par exemple à l'intérieur d'un couvercle (non-illustré) pivotant par rapport au bloc d'extraction, qui pousse la capsule le long du canal d'introduction jusqu'à sa position au-dessus du logement 18. Ce couvercle avec poussoir peut aussi agir sur un capteur de position détectant sa position fermée, indiquant que la capsule est introduite et que la tête d'injection peut être fermée sur le porte-capsule. D'autres moyens pour aider à convoyer la capsule le long du canal d'introduction jusqu'à sa position au-dessus du logement peuvent être réalisés sans sortir du cadre de l'invention. Par exemple, des faces opposées du canal peuvent comprendre des roulements sur ressorts qui sont écartés élastiquement quand la capsule est introduite dans le canal d'introduction, et ensuite qui poussent la capsule vers le logement 18 du porte-capsule en retournant à leur position de repos.

## Revendications

1. Appareil pour la préparation d'une boisson ou d'un aliment liquide à partir d'une capsule (3) contenant une substance à extraire par introduction d'eau sous pression dans la capsule, l'appareil comprenant un bloc d'extraction (4) avec un canal d'introduction (14) de la capsule, un porte-capsule (8) comprenant un logement (18) et ayant une paroi d'extraction (22), une tête d'injection (10) pour l'injection d'eau dans la capsule, et un mécanisme d'ouverture et fermeture (12) pour effectuer un mouvement relatif entre le porte-capsule et la tête d'injection pour l'ouverture et la fermeture de la tête d'injection au porte-capsule, **caractérisé en ce que** le porte-capsule est monté de manière pivotante par rapport au corps (6) du bloc d'extraction (4), le porte-capsule pouvant pivoter d'une position d'extraction à une position d'évacuation de la capsule, l'appareil comprenant en outre un mécanisme d'éjection de la capsule comprenant un rail d'évacuation (60) solidaire du corps du bloc d'extraction et configuré pour supporter une collerette de la capsule lorsque le porte-capsule est pivoté de sa position d'extraction à sa position d'évacuation.

2. Appareil selon la revendication précédente **caractérisé en ce que** la distance de la surface supérieure (61) du rail d'évacuation par rapport à l'axe de pivotement (64) du porte-capsule, est plus grande vers l'extrémité libre (63) que la distance de la surface supérieure du rail par rapport à l'axe de pivotement à proximité du corps du bloc d'extraction.

3. Appareil selon l'une des deux revendications précédentes **caractérisé en ce que** le porte-capsule comprend un rebord (35') avec des parties (35a, 35b) en creux se positionnant sous les rails d'évacuation lorsque le porte-capsule est dans la position haute.

4. Appareil selon l'une des trois revendications précédentes **caractérisé en ce que** la rotation du porte-capsule de sa position d'extraction à la position d'évacuation est effectuée par un ressort (65).

5. Appareil selon l'une des quatre revendications précédentes **caractérisé en ce que** le retour du porte capsule de sa position d'évacuation à la position d'extraction est assuré par un bras de rappel (66) fixé de manière pivotante à la tête d'injection (10).

6. Appareil selon l'une des cinq revendications précédentes **caractérisé en ce qu'**il comprend un dispositif de verrouillage (62) du porte-capsule comprenant un corps amovible (74) avec un doigt de verrouillage (75) en appui contre une épaule (76) du porte-capsule lorsque il est dans sa position d'extraction.

7. Appareil selon la revendication précédente **caractérisé en ce que** le et le dispositif de verrouillage (62) du porte-capsule comprend un crochet (78) destinée à engager une épaule complémentaire (81) de la de la tête d'injection (10) lorsqu'elle est descend dans la position d'extraction.

8. Appareil selon la revendication précédente **caractérisé en ce qu'**il comprend une came (82) fixe par rapport au bloc d'extraction (6) configuré pour découpler le crochet de la tête d'injection lorsqu'elle s'approche de sa position haute.

9. Appareil selon l'une quelconque des trois revendications précédentes, **caractérisé en ce que** le canal d'introduction est incliné à un angle (α) entre 30 et 60 degrés par rapport à un plan horizontal (HZ).

## Patentansprüche

1. Vorrichtung zur Zubereitung eines Getränks oder eines flüssigen Lebensmittels auf der Basis einer Kapsel (3), die eine durch Einführen von Wasser unter Druck in die Kapsel zu extrahierende Substanz enthält, wobei die Vorrichtung einen Extraktionsblock (4) mit einem Einführkanal (14) der Kapsel, einen Kapselhalter (8), der eine Aufnahme (18) umfasst und eine Extraktionswand (22) hat, einen Injektionskopf (10) zum Einspritzen von Wasser in die Kapsel und einen Öffnungs- und Schließmechanismus (12) zwecks Durchführung einer relativen Bewegung zwischen dem Kapselhalter und dem Injektionskopf zum Öffnen und Schließen des Injektionskopfs am Kapselhalter umfasst, **dadurch gekennzeichnet, dass** der Kapselhalter schwenkbar in Bezug zum Körper (6) des Extraktionsblocks (4) montiert ist, wobei der Kapselhalter von einer Extraktionsstellung in eine Auswurfstellung der Kapsel schwenkbar ist, wobei die Vorrichtung ferner einen Auswurfmechanismus der Kapsel umfasst, der eine Auswurfschiene (60) umfasst, die mit dem Körper des Extraktionsblocks fest verbunden ist und konfiguriert, um einen Kragen der Kapsel zu stützen, wenn der Kapselhalter aus seiner Extraktionsstellung in seine Auswurfstellung geschwenkt ist.

2. Vorrichtung nach vorangehendem Anspruch, **dadurch gekennzeichnet, dass** der Abstand zwischen der oberen Fläche (61) der Auswurfschiene in Bezug zur Schwenkachse (64) des Kapselhalters in Richtung des freien Endes (63) größer ist als der Abstand der oberen Fläche der Schiene in Bezug zur Schwenkachse in der Nähe des Extraktionsblocks.

3. Vorrichtung nach einem der zwei vorangehenden Ansprüche, **dadurch gekennzeichnet, dass** der Kapselhalter einen Rand (35') mit hohlen Abschnitten (35a, 35b) umfasst, die sich unter den Auswurfschienen positionieren, wenn der Kapselhalter in der hohen Stellung ist.

4. Vorrichtung nach einem der drei vorangehenden Ansprüche, **dadurch gekennzeichnet, dass** die Rotation des Kapselhalters aus seiner Extraktionsstellung in die Auswurfstellung von einer Feder (65) durchgeführt wird.

5. Vorrichtung nach einem der vier vorangehenden Ansprüche, **dadurch gekennzeichnet, dass** die Rückkehr des Kapselhalters aus seiner Auswurfstellung in die Extraktionsstellung von einem Rückholarm (66) durchgeführt wird, der schwenkbar am Injektionskopf (10) befestigt ist.

6. Vorrichtung nach einem der fünf vorangehenden Ansprüche, **dadurch gekennzeichnet, dass** sie eine Verriegelungsvorrichtung (62) des Kapselhalters umfasst, die einen lösbaren Körper (74) mit einem Verriegelungsfinger (75) in Abstützung auf einem Absatz (76) des Kapselhalters hat, wenn er in seiner Extraktionsstellung ist.

7. Vorrichtung nach vorangehendem Anspruch, **dadurch gekennzeichnet, dass** die Verriegelungsvorrichtung (62) des Kapselhalters einen Haken (78) umfasst, der dazu bestimmt ist, einen komplementären Absatz (81) des des Injektionskopfs (10) zu beanspruchen, wenn sie ist sich in die Extraktionsstellung hinabbewegt.

8. Vorrichtung nach vorangehendem Anspruch, **dadurch gekennzeichnet, dass** sie einen in Bezug zum Extraktionsblock (6) festen Nocken (82) umfasst, der konfiguriert ist, um den Haken vom Injektionskopf zu entkoppeln, wenn er sich seiner hohen Stellung annähert.

9. Vorrichtung nach einem der drei vorangehenden Ansprüche, **dadurch gekennzeichnet, dass** der Einführkanal in einem Winkel (α) zwischen 30 und 60 Grad in Bezug zu einer horizontalen Ebene (HZ) geneigt ist.

## Claims

1. An appliance for preparing a beverage or a liquid food from a container (3) containing a substance to be extracted, by introducing pressurized water into the container, the appliance comprising an extraction block (4) with an insertion channel (14) of the container, a container holder (8) comprising a recess (18) and having an extraction wall (22), an injection head (10) for injecting water into the container, and an opening and closing mechanism (12) for accomplishing a relative motion between the container holder and the injection head for opening and closing the injection head at the container holder, **characterized in that** the container holder is pivotably mounted with respect to the body (6) of the extraction block (4), the container holder being able to pivot from an extraction position to a discharge position of the container, the appliance further comprising a mechanism for ejecting the capsule comprising a discharge rail (60) integral with the body of the extraction block and configured to support a collar of the container when the container holder is pivoted from its extraction position to its discharge position.

2. The appliance according to the foregoing claim, **characterized in that** the distance from the upper surface (61) of the discharge rail with respect to the pivoting axis (64) of the container holder is greater toward the free end (63) than the distance from the upper surface of the rail with respect to the pivoting axis in proximity of the body of the extraction block.

3. The appliance according to one of the two foregoing claims, **characterized in that** the container holder comprises a rim (35') with hollow portions (35a, 35b) positioned under the discharge rails when the container holder is in the high position.

4. The appliance according to one of the three foregoing claims, **characterized in that** the rotation of the container holder from its extraction position to the discharge position is carried out by a spring (65).

5. The appliance according to one of the four foregoing claims, **characterized in that** the return of the container holder from its discharge position to the extraction position is provided by a return arm (66) attached pivotally to the injection head (10).

6. The appliance according to one of the five foregoing claims, **characterized in that** it comprises a locking device (62) of the container holder comprising a removable body (74) with a locking finger (75) resting against a shoulder (76) of the container holder when it is in its extraction position.

7. The appliance according to the foregoing claim **characterized in that** the locking device (62) of the container holder comprises a hook (78) intended to engage a complementary shoulder (81) of the injection head (10) when it drops into the extraction position.

8. The appliance according to the foregoing claim, **characterized in that** it comprises a cam (82), fixed with respect to the extraction block (6), configured to decouple the hook from the injection head when it comes near its high position.

9. The appliance according to any one of the three foregoing claims, **characterized in that** the insertion channel is tilted at an angle (α) between 30 and 60 degrees with respect to a horizontal plane (HZ).
